# EUROPEAN PATENT APPLICATION

(11) **EP 4 366 384 A1**
(43) Date of publication of application: **08.05.2024**
(21) Application number: 23207429.4
(22) Date of filing: 02.11.2023
(51) Int. Cl.: H04W 40/02

(54) **RSD PARAMETERS HANDLING FOR PDN LEGGED MA PDU SESSION**

(30) Priority: 04.11.2022 US 202263382308 P; 29.10.2023 US 202318496901
(71) Applicant: MediaTek Inc., 30078 Hsinchu City (TW)
(72) Inventor: LIN, Yuan-Chieh, 30078 Hsinchu City (TW); LIN, Yu-Hsin, 30078 Hsinchu City (TW)
(74) Representative: Hoefer & Partner Patentanwälte mbB

(57) **Abstract**

Methods and apparatus are provided for the UE (101) handling RSD parameters for MA preferences when the UE is in S1 mode. In one novel aspect, the MA PDU preference is applicable for a UE attached to EPS if the UE supports MA PDU session and procedures for PDN connection establishment and a mapped EPS parameter description of an MA preference type of the selected RSD indicates the MA preference (150). In one embodiment, the selected RSD indicates MA preference when the EPS parameter description of an MA preference type indicates that the PDN connection should be established as a user-plane resource of a multi-access PDU session (140) if the UE supports MA PDU session and procedures for PDN connection establishment. In one embodiment, the PDN connection is established via a PDN connectivity procedure in an EPS or an EPC.

## Description

### CROSS REFERENCE TO RELATED APPLICATIONS

This application claims priority under 35 U.S.C. §119 from U.S. Provisional Application Number 63/382,308, entitled "RSD PARAMETERS HANDLING FOR PDN LEGGED MA PDU SESSION", filed on November 4, 2022, the subject matter of which is incorporated herein by reference.

### TECHNICAL FIELD

The disclosed embodiments relate generally to wireless communication, and, more particularly, to method of routing selection descriptor (RSD) parameters handing for packet data networks (PDN) legged multi-access (MA) protocol data unit (PDU) session.

### BACKGROUND

The wireless communications network has grown exponentially over the years. A Long-Term Evolution (LTE) system offers high peak data rates, low latency, improved system capacity, and low operating cost resulting from simplified network architecture. LTE systems, also known as the 4G system, also provide seamless integration to older wireless network, such as GSM, CDMA, and Universal Mobile Telecommunication System (UMTS). In LTE systems, an evolved universal terrestrial radio access network (E-UTRAN) includes a plurality of evolved Node-Bs (eNodeBs or eNBs) communicating with a plurality of mobile stations, referred to as user equipments (UEs). The 3^{rd} generation partner project (3GPP) network normally includes a hybrid of 2G/3G/4G systems. The Next Generation Mobile Network (NGMN) board has decided to focus the future NGMN activities on defining the end-to-end requirements for 5G new radio (NR) systems (5GS).

The UE policies for 5GS include UE route selection policy (URSP) and access network discovery and selection policy (ANDSP). The UE policies can be delivered from a Policy Control Function (PCF) to UE. PCF takes care of network policies to manage network behavior. PCF gets the subscription information from Unified Data Management (UDM). PCF interfaces to both Access and Mobility Function (AMF) to manage the mobility context and Session Management Function (SMF) to manage the session contexts. PCF also plays a crucial role in providing a schema for network slicing and roaming. PCF triggers the URSP which enables the UE to determine how a certain application should be handled in the context of an existing or new PDN connection in EPS or PDU session in 5GS.

In 4G evolved packet system (EPS), a Packet Data Network (PDN) connectivity procedure is an important process when LTE communication system accesses to the packet data network. The purpose of PDN connectivity procedure is to setup a default EPS bearer between a UE and the packet data network. In 5G, a Protocol Data Unit (PDU) session establishment is a parallel procedure of the PDN connectivity procedure in 4G. A PDU session defines the association between the UE and the data network that provides a PDU connectivity service. When an application is executed, the upper layer of the UE sends the application information to the URSP entity for matching a URSP rule (i.e., by evaluating the traffic descriptor), and use the corresponding RSD (Route Selection Descriptor) of the selected URSP rule to associate with an existing PDU session or to establish a new PDU session. The UE tries to reuse an existing PDU session.

Operators are seeking ways to balance data traffic between mobile cellular networks and non-3GPP access in a way that is transparent to users and reduces mobile network congestion. In 5GS, UEs that can be simultaneously connected to both 3GPP access (3GPP access of 5GS, or 3GPP access of EPC) and non-3GPP access (using 3GPP NAS signalling), thus the 5GS is able to take advantage of these multiple accesses to improve the user experience, optimize the traffic distribution across various accesses. Accordingly, 3GPP introduced Multi-Access (MA) PDU session in 5GS. An MA PDU session uses one 3GPP access network or one non-3GPP access network at a time, or simultaneously one 3GPP access network and one non-3GPP access network. At any given time, the MA PDU session can have user-plane resources established on both 3GPP access (also referred as 3GPP leg, e.g., 3GPP 5GS leg or 3GPP EPS/PDN leg) and non-3GPP access (also referred as non-3GPP leg), or on one access only.

When the UE is attached to EPS and trying to establish the PDN leg of an MA PDU session, the Multi-Access preference is not applicable to the UE in S1 mode. As a result, the UE registered in the 4G cannot establish the PDN connection as a leg of an MA PDU session. A solution is sought.

### SUMMARY

Methods and apparatus are provided for the UE handling RSD parameters for MA preferences when registered in the 4G system. A method and a User Equipment according to the invention are defined in the independent claims. The dependent claims define preferred embodiments thereof. In one novel aspect, the MA PDU preference is applicable for a UE attached to EPS if the UE supports MA PDU session and procedures for PDN connection establishment and a mapped EPS parameter description of a MA preference type of the selected RSD indicates the MA preference. In one embodiment, the selected RSD indicates MA preference when the EPS parameter description of an MA preference type indicates that the PDN connection should be established as a user-plane resource of a multi-access PDU session if the UE supports MA PDU session and procedures for PDN connection establishment. In one embodiment, the UE maintains a set of UE Route Selection Policy (URSP) rules, wherein the UE is registered with an EPS (in S1 mode); receives a request from the upper layer with an application information for requesting information via which PDU session to send a Packet Data Unit (PDU) of an application, selects a matching URSP rule (by matching the traffic descriptor (TD) of the selected URSP rule with the application information), selects an RSD of the selected URSP rule, and determines whether a packet data networks (PDN) connection is to be established based on the selected RSD. Preferably, if the selected RSD contains MA preferences the UE determines a packet data networks (PDN) connection is to be established. Preferably, the MA preference indicates PDN connection should be established as a user-plane resource of a MA PDU session if the UE supports MA PDU session and procedures for PDN connection establishment. Preferably, if the UE determines the MA PDU session is applicable, the UE determines if an MA PDU session that matches the selected RSD exists. If there is no existing MA PDU session that matches the selected RSD, the UE establishes the PDN connection as a user-plane resource of an MA PDU session. If there is an existing MA PDU session that matches the selected RSD, and wherein there is no PDN connection leg for the MA PDU session, the UE establishes the PDN connection as a user-plane resource of the existing MA PDU session. In one embodiment, there is an existing MA PDU session and an existing PDN connection of the existing MA PDU session, the existing PDN connection is re-used (notify the application to use this existing PDU/PDN to transmit the PDU (e.g., IP packets) of the application). Preferably, the PDN connection is established via a PDN connectivity procedure in an evolved packet system (EPS). Alternatively preferably, the PDN connection is established via a PDN connectivity procedure in an evolved packet core (EPC). In one embodiment, the UE does not support MA PDU session or does not support procedures for PDN connection establishment, and wherein the MA PDU session is applicable for the PDN connection. Preferably, the UE obtains the set of URSP in a descendent priority comprising through signaling from the wireless network, through pre-configuration in a universal subscriber identify module (USIM), or through a pre-configuration in the mobile equipment (ME).

Other embodiments and advantages are described in the detailed description below. This summary does not purport to define the invention. The invention is defined by the claims.

### BRIEF DESCRIPTION OF THE DRAWINGS

The accompanying drawings, where like numerals indicate like components, illustrate embodiments of the invention.
Figure 1 illustrates an exemplary 5G network 100 supporting User Equipment (UE) registered in the 4G system to establish PDN connection as a leg of an MA PDU session in accordance with embodiments of the current invention.
Figure 2 illustrates simplified block diagrams of a user equipment (UE) and a base station in accordance with embodiments of the current invention.
Figure 3 illustrates the content of a URSP rule as defined in 3GPP specification and parameters for URSP rule matching for MA PDU with PDN leg.
Figure 4 illustrates examples of URSP rule matching for an application in EPS in accordance with embodiments of the current invention.
Figure 5 illustrates an exemplary diagram for obtaining URSP rule configuration by the UE in accordance with embodiments of the current invention.
Figure 6 illustrates exemplary diagrams for the UE registered in the 4G system to determine whether the MA PDU session is applicable for an application traffic in accordance with embodiments of the current invention.
Figure 7 illustrates exemplary diagrams for the UE registered in the 4G system to establish PDN connection for an application as a leg of an MA PDU session when the MA PDU preference is applicable to the application traffic.
Figure 8 illustrates an exemplary flow chart for the UE registered in the 4G system to determine if an MA PDU session is applicable to an application traffic in accordance with embodiments of the current invention.

### DETAILED DESCRIPTION

Reference will now be made in detail to some embodiments of the invention, examples of which are illustrated in the accompanying drawings.

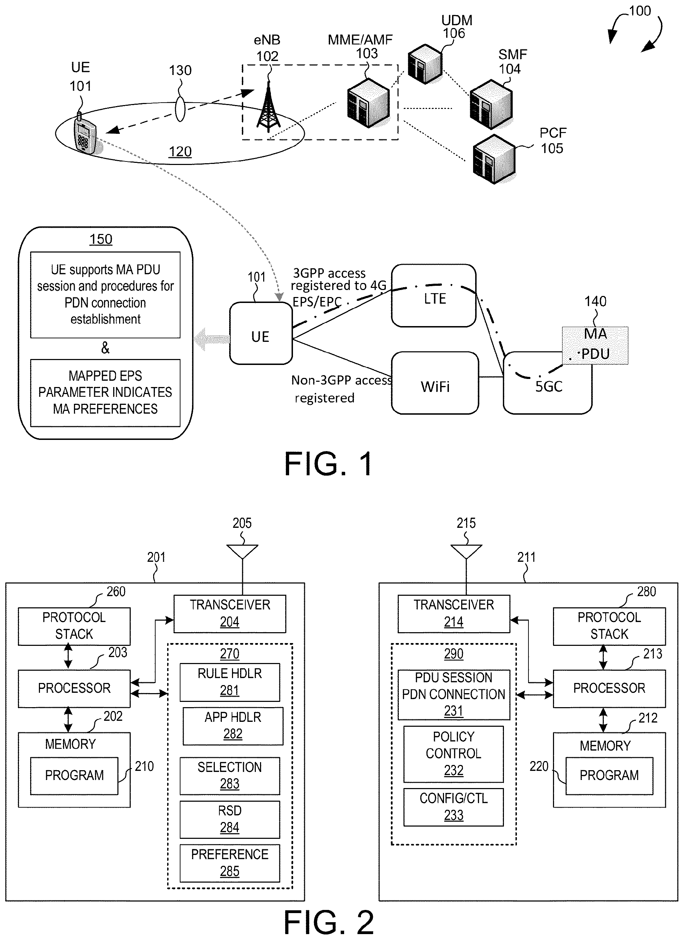

Figure 1 illustrates an exemplary wireless network 100 supporting User Equipment (UE) registered in the 4G system to establish PDN connection as a leg of an MA PDU session in accordance with embodiments of the current invention. Wireless system 100 comprises a UE 101, a base station eNB 102, a mobility management entity / access and mobility management function (MME/AMF) 103, a session management function (SMF) 104, a policy control function (PCF) 105, and a unified data management (UDM) 106. In the example of Figure 1, UE 101 and its serving base station eNB 102 belong to part of a radio access network RAN 120. In Access Stratum (AS) layer, RAN 120 provides radio access for UE 101 via a radio access technology (RAT). In Non-Access Stratum (NAS) layer, MME/AMF 103 communicates with eNB 102 and 5GC for access and mobility management of wireless access devices in 5G network 100. UE 101 may be equipped with a radio frequency (RF) transceiver or multiple RF transceivers for different application services via different RATs/CNs. UE 101 may be a smart phone, a wearable device, an Internet of Things (IoT) device, and a tablet, etc.

5GS networks are packet-switched (PS) Internet Protocol (IP) networks. When UE joins a 5GS network, a PDU address (i.e., the one that can be used on the PDU) is assigned to the UE for its connection to the PDU. In 4G, EPS has defined a Default EPS Bearer to provide the IP Connectivity. In 5G, a Protocol Data Unit (PDU) session establishment procedure is a parallel procedure of a PDN connection procedure in 4G. A PDU session (e.g., 130) defines the association between the UE and the data network that provides a PDU connectivity service. Each PDU session is identified by a PDU session ID, and may include multiple QoS flows and QoS rules.

The UE policies for 5GS include UE route selection policy (URSP) and access network discovery and selection policy (ANDSP). For UE, such as UE 101, registered in the 4G network, a mapping table for traffic descriptor and a mapping table for RSD are provided. The mapping table provides mapped EPS parameter description with RSD parameter name. The UE policies can be delivered from Policy Control Function (PCF) to UE. PCF takes care of network policies to manage network behavior. PCF gets the subscription information from Unified Data Management (UDM). PCF interfaces to both Access and Mobility Function (AMF) to manage the mobility context and Session Management Function (SMF) to manage the session contexts. PCF also plays a crucial role in providing a scheme for network slicing and roaming. PCF provisions the URSP which enables the UE to determine how a certain application should be handled in the context of an existing or new PDU session. The UE policies can also be pre-configured in the UE (USIM or NVRAM). The pre-configured policy should be applied by UE only when UE has not received the same type of policy from the PCF.

In wireless system 100, UEs can be simultaneously connected to both 3GPP access (3GPP access of 5GS, or 3GPP access of EPC) and non-3GPP access (using 3GPP NAS signalling). Accordingly, 3GPP introduced Multi-Access (MA) PDU session in 5GS. At any given time, an MA PDU session can have user-plane resources established on both 3GPP access (also referred as 3GPP leg, e.g., 3GPP 5GS leg or 3GPP EPS/PDN leg) and non-3GPP access (also referred as non-3GPP leg), or on one access only.

In the example of Figure 1, UE 101 is registered to 4G EPS/EPC (LTE) for 3GPP access and is registered to 5GC via WiFi for non-3GPP access. UE 101 is registered with the 4G network (in S1 mode). Next, UE 101 performs PDN connectivity procedure. In one novel aspect 150, UE 101 supports MA PDU session and procedures for PDN connection establishment. To establish a PDN connection as a user-plane resource of an MA PDU session (140), the UE checks if the mapped EPS parameter indicates MA PDU preferences. If so, UE 101 establishes a PDN connection as 3GPP user-plane resource of the MA PDU session to be established if there is no MA PDU session yet. If there is already an existing MA PDU session without PDN connection as 3GPP user-plane resource, UE 101 establishes a PDN connection as 3GPP user-plane resource of an existing MA PDU session, such as MA PDU session 140.

Figure 2 illustrates simplified block diagrams of wireless devices, e.g., a UE 201 and network entity 211 in accordance with embodiments of the current invention. Network entity 211 may be a base station combined with an MME or AMF. Network entity 211 has an antenna 215, which transmits and receives radio signals. A radio frequency RF transceiver module 214, coupled with the antenna, receives RF signals from antenna 215, converts them to baseband signals and sends them to processor 213. RF transceiver 214 also converts received baseband signals from processor 213, converts them to RF signals, and sends out to antenna 215. Processor 213 processes the received baseband signals and invokes different functional modules to perform features in base station 211. Memory 212 stores program instructions and data 220 to control the operations of base station 211. In the example of Figure 2, network entity 211 also includes protocol stack 280 and a set of control functional modules and circuit 290. PDU session handling circuit 231 handles PDU session/PDN connection establishment and modification procedures. Policy control module 232 that configures policy rules for UE. Configuration and control circuit 233 provides different parameters to configure and control UE of related functionalities including mobility management and session management.

Similarly, UE 201 has memory 202, a processor 203, and radio frequency (RF) transceiver module 204. RF transceiver 204 is coupled with antenna 205, receives RF signals from antenna 205, converts them to baseband signals, and sends them to processor 203. RF transceiver 204 also converts received baseband signals from processor 203, converts them to RF signals, and sends out to antenna 205. Processor 203 processes the received baseband signals and invokes different functional modules and circuits to perform features in UE 201. Memory 202 stores data and program instructions 210 to be executed by the processor to control the operations of UE 201. Suitable processors include, by way of example, a special purpose processor, a digital signal processor (DSP), a plurality of micro-processors, one or more micro-processor associated with a DSP core, a controller, a microcontroller, application specific integrated circuits (ASICs), file programmable gate array (FPGA) circuits, and other type of integrated circuits (ICs), and/or state machines. A processor in associated with software may be used to implement and configure features of UE 201.

UE 201 also comprises a set of functional modules and control circuits to carry out functional tasks of UE 201. Protocol stacks 260 comprise application layer and other upper layers to manage different applications, Non-Access-Stratum (NAS) layer to communicate with an AMF entity connecting to the core network, Radio Resource Control (RRC) layer for high layer configuration and control, Packet Data Convergence Protocol/Radio Link Control (PDCP/RLC) layer, Media Access Control (MAC) layer, and Physical (PHY) layer. System modules and circuits 270 may be implemented and configured by software, firmware, hardware, and/or combination thereof. The function modules and circuits, when executed by the processors via program instructions contained in the memory, interwork with each other to allow UE 201 to perform embodiments and functional tasks and features in the network. Circuits 270 comprise a rule handler 281 that maintains a set of UE Route Selection Policy (URSP) rules, wherein the UE is registered with an EPS; a application handler 282 that receives a request from the upper layer with an application information for requesting information via which PDU session to send a Packet Data Unit (PDU) of an application; a selection module 283 that selects a URSP rule by matching a traffic descriptor (TD) of the selected URSP with the application information; a route selection descriptor (RSD) module 284 that selects a RSD of the selected URSP; and a preference module 285 that determines whether a packet data networks (PDN) connection is to be established based on the selected RSD.

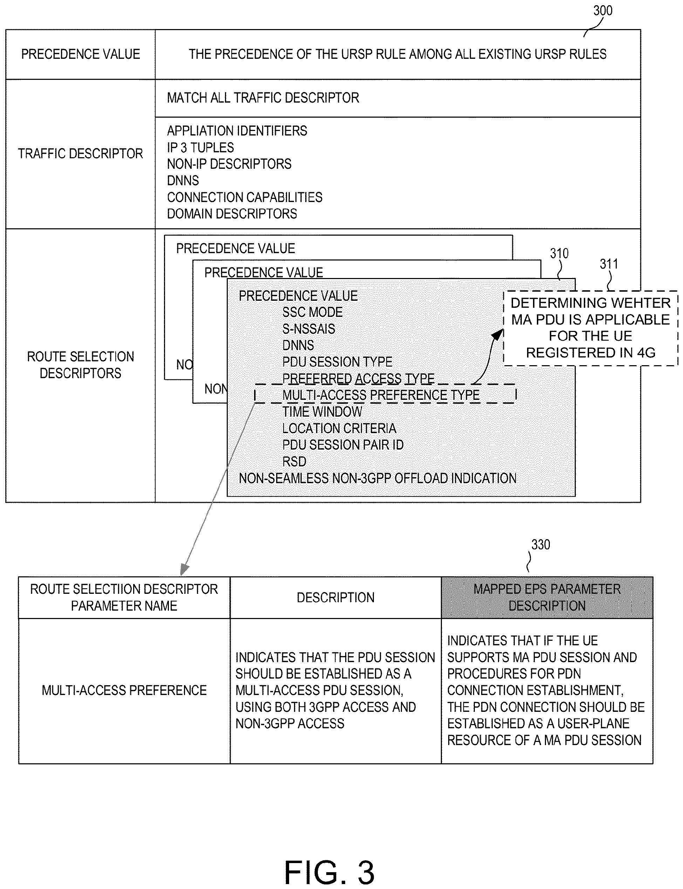

Figure 3 illustrates the content of a URSP rule as defined in 3GPP specification and parameters for URSP rule matching for MA PDU with PDN leg. URSP is defined as a set of one or more URSP rules. As depicted by Table 300, each URSP rule is composed of: 1) a precedence value of the URSP rule identifying the precedence of the URSP rule among all the existing URSP rules; 2) a traffic descriptor (TD); and 3) one or more route selection descriptors (RSDs). The traffic descriptor includes either 1) a match-all traffic descriptor; or 2) at least one of the following components: A) one or more application identifiers; B) one or more IP 3 tuples, i.e., the destination IP address, the destination port number, and the protocol used above the IP; C) one or more non-IP descriptors, i.e., destination information of non-IP traffic; D) one or more DNNs; E) one or more connection capabilities; and F) one or more domain descriptors, i.e., destination FQDN(s).

Each RSD 310 includes a precedence value of the route selection descriptor and either 1) one PDU session type and, optionally, one or more of the followings: A) session and service continuity (SSC) mode; B) one or more S-NSSAIs; C) one or more DNNs; D) PDU session type; E) preferred access type; F) multi-access preference; G) time window; H) location criteria; I) PDU session pair ID; and J) RSN (Redundancy Sequence Number); or 2) non-seamless non-3GPP offload indication. Only one URSP rule in the URSP can be a default URSP rule and the default URSP rule should contain a match-all traffic descriptor. If a default URSP rule and one or more non-default URSP rules are included in the URSP, any non-default URSP rule should have lower precedence value (i.e., higher priority) than the default URSP rule.

In one novel aspect 311, when performing URSP rule matching with an application in EPS, the UE matches a traffic descriptor (TD) of a selected URSP rule. The UE then selects a route selection descriptor (RSD) and determines if MA PDU preference applies for the traffic for the 4G registered UE. Preferably, a mapping table is provided. The Multi-Access preference is applicable to the 4G registered UE if the mapped EPS parameter description contains the MA preference for the selected RSD. The mapped EPS parameter description 330 indicates that if the UE supports MA PDU session and procedures for PDN connection establishment, the PDN connection should be established as a user-plane resource of an MA PDU session.

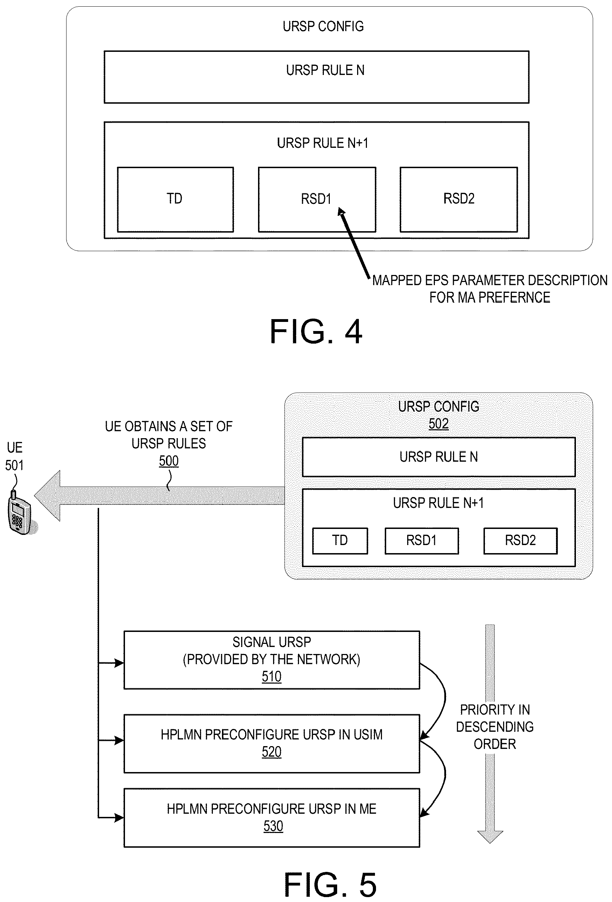

Figure 4 illustrates examples of URSP rule matching for an application in EPS in accordance with embodiments of the current invention. When an application is started on a UE in EPS, the UE upper layers trigger URSP rule matching. The UE evaluates the URSP rules, except the default URSP rule, with a traffic descriptor matching the application information in the order of their precedence values. If the UE finds the traffic descriptor (TD) in a non-default URSP rule matching the application information, the UE selects the URSP of the TD. For example, TD of URSP Rule N+1 matches the traffic descriptor, URSP Rule N+1 is selected. Next, the UE searches an RSD of URSP N+1 based on the information of the application traffic / traffic descriptor. If no matching is found, the UE evaluates the next URSP rules with a TD matching the application information in the order of their precedence values. If a match is found, for example RSD1 of URSP rule N+1, the UE determines if MA PDU session is applicable based on the selected RSD. In one novel aspect, if the UE supports MA PDU session and procedures for PDN connection establishment, the UE determines the MA PDU session is applicable when the mapped EPS parameter description in the selected RSD indicates the MA preferences applicable.

As depicted in Figure 4, the UE is configured with multiple URSP rules including URSP rule 1, ..., URSP rule N, URSP rule N+1, ..., and so on so forth. Each URSP rule comprises a TD and a list of RSDs. For example, URSP rule N+1 includes a TD, RSD1 and RSD2. If the UE finds the TD in URSP rule N+1 matching the application information, the UE then selects an RSD, e.g., RSD1, with the next smallest precedence value for URSP rule matching. The UE then determines the RSD components and parameters in RSD1 and tries to match with an existing PDU session or to create a new PDU session.

Figure 5 illustrates an exemplary diagram for obtaining URSP rule configuration by the UE in accordance with embodiments of the current invention. In one embodiment 500, UE 501 obtains a set of URSP rules. UE 501 is registered with a 4G system. UE 501 obtains a set of URSP rules in a URSP configuration 502. URSP configuration 502 includes one or more sets of URSP rules, such as URSP Rule N and URSP Rule N+1. Each URSP rule includes a TD and one or more RSDs, such as RSD1 and RSD2 for URSP Rule N+1. In one embodiment 510, UE 501 obtains the set of URSP rules through signaling from the wireless network. In another embodiment 520, UE 501 obtains the set of URSP rules through pre-configuration in a universal subscriber identify module (USIM). In yet another embodiment 530, UE 501 maintains/obtains the set of URSP rules through pre-configuration in the mobile equipment (ME) or NVRAM. Preferably, the method of obtaining the URSP rules are prioritized from embodiment 510, 520 and 530 in a descendent order.

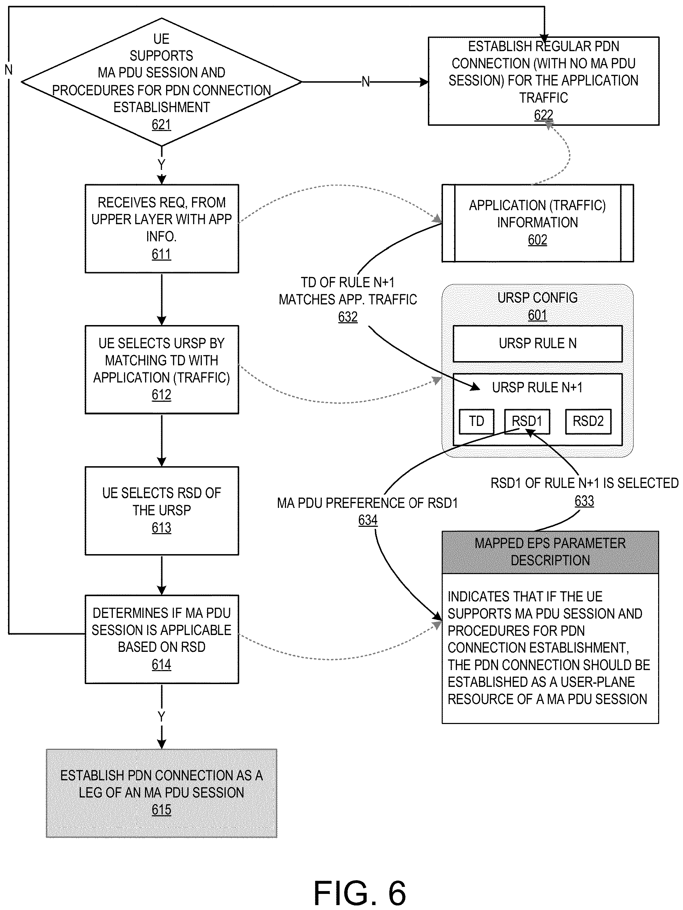

Figure 6 illustrates exemplary diagrams for the UE registered in the 4G system to determine whether the MA PDU session is applicable for an application traffic in accordance with embodiments of the current invention. In one novel aspect, the UE registered in the EPS can establish a PDN connection as a leg of or a user-plane resource of an MA PDU session if the UE qualifies and the URSP rule indicates MA preferences. At step 621, the UE determines if the UE qualifies by determining whether the UE supports MA PDU session and procedures for PDN connection establishment. If step 621 determines no, the UE moves to step 622 and establishes a regular PDN connection, with no MA PDU session, for the application traffic. If step 621 determines yes, it means that the UE supports MA PDU session and procedures for PDN connection establishment. When an application traffic is to be sent, at step 611, the UE receives a request from the upper layer with an application information for requesting information via which PDU session to send a Packet Data Unit (PDU) of an application. The UE evaluates the information/ descriptors 602 of the application (traffic). At step 612, the UE selects URSP configuration 601 by matching the TD of the selected URSP rule with the application (traffic) information 602. As an example, at step 632, URSP Rule N+1 of the UE URSP configuration 601 is selected based on the description/ information 602 of the application (traffic). At step 613, the UE selects an RSD. For example, at step 633, RSD1 of the selected URSP rule N+1 is selected that matches the information of the application (traffic) information. At step 614, the UE determines if MA PDU session is applicable to the application (traffic) based on the selected RSD. For example, at step 634, the UE finds the mapped EPS parameter description for the MA preference indicates that if the UE supports MA PDU session and procedures for PDN connection establishment, the PDN connection should be established as a user-plane resource of an MA PDU session. If step 614 determines no, which means the MA preference is not applicable, the UE moves to step 622 and establishes a regular PDN connection, with no MA PDU session, for the application (traffic). If step 614 determines yes, which means the MA preference is applicable to the application traffic, the UE moves to step 615 and establishes the PDN connection for the application (traffic) as a user-plane resource (or a leg) of an MA PDU session.

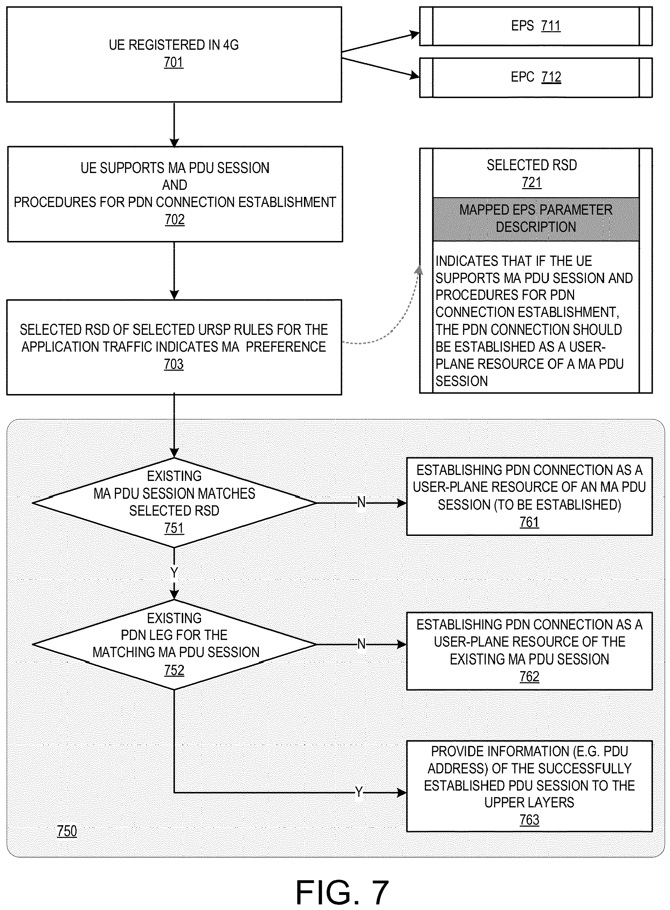

Figure 7 illustrates exemplary diagrams for the UE registered in the 4G system to establish PDN connection for an application as a leg of an MA PDU session when the MA PDU preference is applicable to the application traffic. At step 701, the UE is registered to the 4G system. In one embodiment 711, when the UE is registered in the 4G system, the PDN connection for the application traffic is established via a PDN connectivity procedure in an EPS. In another embodiment 712, when the UE is registered in the 4G system, the PDN connection for the application traffic is established via a PDN connectivity procedure in an evolved packet core (EPC). At step 702, the UE determines that the UE supports MA PDU session and procedures for PDN connection establishment. At step 703, the UE determines the selected RSD 721 of the selected URSP rule for the application traffic indicates MA preference. Preferably, the UE determines the MA PDU session is applicable for the application traffic based on the selected RSD 721, whose mapped EPS parameter description of the multi-access type indicates that if the UE supports MA PDU session and procedures for PDN connection establishment, the PDN connection should be established as a user-plane resource of a multi-access PDU session. Subsequently, in procedure 750, the UE establishes the PDN connection as a user-plane resource of a multi-access PDU session. At step 751, the UE determines if there is an existing MA PDU session matches the selected RSD. If step 751 determines no, the UE moves to step 761 and establishes the PDN connection as a user-plane resource of an MA PDU session (to be established). If step 751 determines yes, at step 752, the UE determines if an existing PDN leg for the matching MA PDU session exists. If step 752 determines no, at step 762, the UE establishes the PDN connection as a user-plane resource of the existing MA PDU session. If step 752 determines yes, at step 763, the UE provide information (e.g. PDU address) of the successfully established PDU session to the upper layers (uses the existing PDN leg for the application traffic).

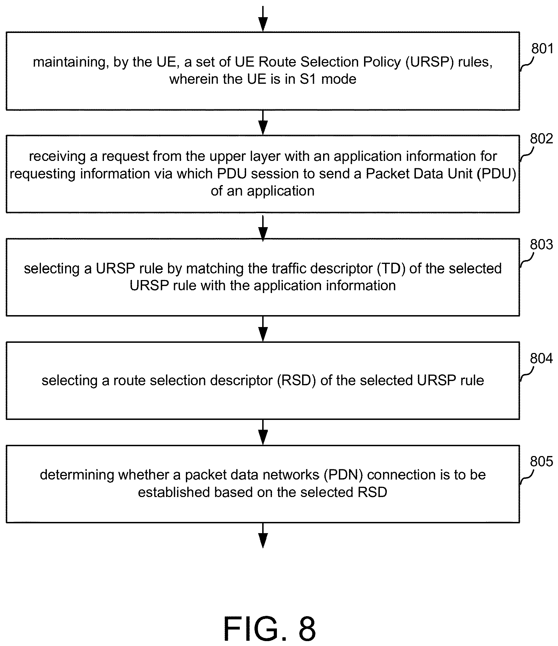

Figure 8 illustrates an exemplary flow chart for the UE registered in the 4G system to determine if an MA PDU session is applicable to an application traffic in accordance with embodiments of the current invention. At step 801, the UE maintains a set of UE Route Selection Policy (URSP) rules, wherein the UE is registered with an EPS (in S1 mode). At step 802, the UE receives a request from the upper layer with an application information for requesting information via which PDU session to send a Packet Data Unit (PDU) of an application. At step 803, the UE selects a URSP rule by matching a traffic descriptor (TD) of the selected URSP rule with the application information. At step 804, the UE selects a route selection descriptor (RSD) of the selected URSP rule. At step 805, the UE determines whether a packet data networks (PDN) connection is to be established based on the selected RSD.

Although the present invention has been described in connection with certain specific embodiments for instructional purposes, the present invention is not limited thereto. Accordingly, various modifications, adaptations, and combinations of various features of the described embodiments can be practiced without departing from the scope of the invention as set forth in the claims.

## Claims

1. A method for a user equipment, in the following also referred to as UE, in a wireless network, comprising:
maintaining, by the UE, a set of UE Route Selection Policy, in the following also referred to as URSP, rules, wherein the UE is in S1 mode (801);
receiving a request from an upper layer with information of an application for requesting information via which PDU session to send a Packet Data Unit, in the following also referred to as PDU, of the application (802);
selecting a URSP rule by matching a traffic descriptor, in the following also referred to as TD, of the selected URSP rule with the information of the application (803);
selecting a route selection descriptor, in the following also referred to as RSD, of the selected URSP rule (804); and
determining whether a packet data networks, in the following also referred to as PDN, connection is to be established based on the selected RSD (805).

2. A User Equipment, in the following also referred to as UE, (201), comprising:
a transceiver (204) that transmits and receives radio frequency, in the following also referred to as RF, signal in a wireless network;
a rule handler (281) that maintains a set of UE Route Selection Policy, in the following also referred to as URSP, rules, wherein the UE (201) is in S1 mode;
an application handler (282) that receives a request from an upper layer with information of an application for requesting information via which PDU session to send a Packet Data Unit, in the following also referred to as PDU, of the application;
a selection module (283) that selects a URSP rule by matching a traffic descriptor, in the following also referred to as TD, of the selected URSP rule with the information of the application;
a route selection descriptor, in the following also referred to as RSD, module (284) that selects an RSD of the selected URSP rule; and
a preference module (285) that determines whether a packet data networks, in the following also referred to as PDN, connection is to be established based on the selected RSD.

3. The method of claim 1 or the UE (201) of claim 2, wherein the UE supports multi-access, in the following also referred to as MA, PDU session and procedures for PDN connection establishment.

4. The method or the UE (201) of claim 3, wherein if the selected RSD contains a MA preference parameter the UE determines a PDN connection is to be established.

5. The method or the UE (201) of claim 4, wherein the MA preference parameter indicates PDN connection should be established as a user-plane resource of a MA PDU session if the UE supports MA PDU session and procedures for PDN connection establishment.

6. The method of claim 4 or 5, further comprising:
determining whether an MA PDU session or PDN connection that matches the selected RSD exists; or
the UE (201) of claim 4 or 5, wherein the preference module (285) further determines whether an MA PDU session or PDN connection that matches the selected RSD exists.

7. The method of claim 6, wherein there is no existing MA PDU session or PDN connection that matches the selected RSD, further comprising:
establishing a PDN connection as a user-plane resource of an MA PDU session; or
the UE (201) of claim 6, wherein there is no existing MA PDU session or PDN connection that matches the selected RSD, and wherein the preference module (285) further establishes a PDN connection as a user-plane resource of an MA PDU session.

8. The method of claim 6, wherein there is an existing MA PDU session that matches the selected RSD, and wherein there is no PDN connection associated with the application, further comprising:
establishing the PDN connection as a user-plane resource of the existing MA PDU session; or
the UE (201) of claim 6, wherein there is an existing MA PDU session that matches the selected RSD, and wherein there is no PDN connection associated with the application, and wherein the preference module (285) further establishes the PDN connection as a user-plane resource of the existing MA PDU session.

9. The method or the UE (201) of claim 6, wherein there is an existing MA PDU session and an existing PDN connection as a user-plane resource of the MA PDU session matches the selected RSD, and wherein the existing MA PDU session or PDN connection is associated with the application.

10. The method of any one of claims 1 and 3 to 9, or the UE (201) of any one of claims 2 to 9, wherein the PDN connection is established via a PDN connectivity procedure in an evolved packet system, in the following also referred to as EPS, or in an evolved packet core, in the following also referred to as EPC.

11. The method of any one of claims 1 and 3 to 10, or the UE (201) of any one of claims 2 to 10, wherein the UE obtains the set of URSP rules in a descendent priority comprising through signaling from the wireless network, through pre-configuration in a universal subscriber identify module, in the following also referred to as USIM, or through a pre-configuration in a mobile equipment, in the following also referred to as ME.
